# EUROPÄISCHE PATENTSCHRIFT

(11) **EP 4 584 950 B1**
(45) Veröffentlichungstag und Bekanntmachung des Hinweises auf die Patenterteilung: **08.04.2026**
(21) Anmeldenummer: 24703992.8
(22) Anmeldetag: 08.02.2024
(51) Int. Cl.: H04N 9/31, B60Q 1/50, B60Q 1/24, B60Q 1/00, B60K 35/21

(54) **VORRICHTUNG UND VERFAHREN ZUR ANZEIGE VON INFORMATIONEN UNTER EINEM FAHRZEUG**
DEVICE AND METHOD FOR DISPLAYING INFORMATION UNDER A VEHICLE
DISPOSITIF ET PROCÉDÉ D'AFFICHAGE D'INFORMATION SOUS UN VÉHICULE

(30) Priorität: 17.02.2023 DE 102023103993
(43) Veröffentlichungstag der Anmeldung: 16.07.2025
(73) Patentinhaber: AUDI AG, 85057 Ingolstadt (DE)
(72) Erfinder: FLACHHUBER, Michael, 92342 Freystadt (DE); SCHEUCHENPFLUG, Johannes, 85107 Baar-Ebenhausen (DE)
(74) Vertreter: Lindner Blaumeier Patent- und Rechtsanwälte
(86) Internationale Anmeldenummer: PCT/EP2024/053131
(87) Internationale Veröffentlichungsnummer: WO 2024/170392

(56) Entgegenhaltungen:
- DE-A1- 102017 210 899
- US-A1- 2019 163 196
- US-A1- 2021 046 863

## Beschreibung

Die Erfindung betrifft ein Kraftfahrzeug, umfassend ein Fahrwerk mit wenigstens zwei Achsen mit jeweils zwei Rädern sowie eine auf dem Fahrwerk sitzende Karosserie mit einem von einem Untergrund beabstandeten Unterboden, wobei wenigstens eine Bildgebungseinrichtung mit einer am Unterboden angeordneten Projektionseinrichtung zum Projizieren einer Informationsdarstellung auf den Untergrund unterhalb des Unterbodens zumindest im Bereich zwischen den beiden Achsen vorgesehen ist, wobei die Bildgebungseinrichtung zur Erzeugung und Projektion einer bezüglich eines definierten Blickwinkels verzerrten Informationsdarstellung ausgebildet ist. Ein solches Kraftfahrzeug ist aus US 2021/046863 A1 bekannt.

Moderne Kraftfahrzeuge ermöglichen es zunehmend, mit der Umgebung zu kommunizieren bzw. Informationen, die von umstehenden Personen oder anderen Verkehrsteilnehmern wahrgenommen werden können, darzustellen. Solche Informationen können beispielsweise als Bilder auf den benachbarten Untergrund, also die Fahrbahn, projiziert werden. Problematisch hierbei ist jedoch, wenn die Bilddarstellung am Tag bei höherer Umgebungshelligkeit erfolgen soll, da die Bodenprojektion rund um das Fahrzeug in diesem Fall kaum erkennbar ist. Zwar ist aus CN 112601059 A ein Kraftfahrzeug bekannt, bei dem mittels unterbodenseitig vorgesehener Bildgebungseinrichtungen eine Information auf den Untergrund unterhalb der Front- und Heckschürze, also vor und hinter der Vorder- und Hinterachse projiziert wird, wo eine gewisse Abschattung über das Kraftfahrzeug gegeben ist, sodass dort dargestellte Informationen auch bei Helligkeit besser sichtbar sind. Jedoch ist dieser Bereich sehr klein, sodass eine auch von etwas weiter entfernt wahrnehmbare Information dort letztlich nicht vernünftig dargestellt werden kann. In US 2019/163196 A1 ist ein fahrender Roboter mit einem seinen Fahrweg anzeigenden Projektionssystem bekannt. DE 10 2017 210 899 A1 beschreibt ein Kraftfahrzeug mit einem Projektionssystem zum Projizieren eines vom Nutzer betrachtbaren, die Orientierung erlaubenden Bilds auf einen zum Fahrzeug benachbarten Bodenbereich.

Der Erfindung liegt daher das Problem zugrunde, ein Kraftfahrzeug mit einer verbesserten Möglichkeit zur Informationsdarstellung anzugeben.

Zur Lösung dieses Problems ist erfindungsgemäß ein Kraftfahrzeug gemäß dem unabhängigen Anspruch 1 vorgesehen, dass eine Erfassungseinrichtung zur Erfassung eines sich in der Umgebung befindlichen Objekts sowie zur Zuordnung eines ermittelten Blickwinkels zu dem Objekt vorgesehen ist, wobei die Bildgebungseinrichtung zur Erzeugung und Projektion der verzerrten Informationsdarstellung in Abhängigkeit des ermittelten Blickwinkels ausgebildet ist. Das erfindungsgemäße Kraftfahrzeug ermöglicht es, den Bereich unterhalb des Kraftfahrzeugs, der zwischen den beiden Achsen liegt, als Projektionsfläche zu nutzen. Das heißt, dass mittels einer entsprechenden Bildgebungseinrichtung samt Projektionseinrichtung wie einem entsprechend leistungsstarken Beamer oder auch mittels eines Lasers eine Informationsdarstellung, sei es ein Bild, ein Symbol, ein Text und Ähnliches, auf den Untergrund, also die Fahrbahn projiziert wird. Gleichzeitig ist die Bildgebungseinrichtung jedoch in der Lage, eine optisch verzerrte Informationsdarstellung zu erzeugen, wobei die Verzerrung bezüglich eines bestimmten Blickwinkels, unter dem eine entfernt vom Kraftfahrzeug befindliche Position in den Bereich unterhalb des Kraftfahrzeugs blickt, ermittelt respektive erzeugt ist. Befindet sich folglich die Person, sei es ein Fußgänger, sei es eine in einem anderen Fahrzeug sitzende Person, beispielsweise in einer Entfernung von 10 Metern, so blickt sie mit einem bestimmten Blickwinkel unter das Kraftfahrzeug, kann also entsprechend weit unter das Fahrzeug blicken. Die Bilddarstellung ist nun optisch derart verzerrt auf die Fahrbahn projiziert, dass sie, unter dem Blickwinkel der externen Person, wiederum als optische korrekte Bilddarstellung erfasst wird, mithin sich also blickwinkelbedingt die Verzerrung der originären Projektion optisch wieder auflöst. Das heißt, dass die Person, die optisch verzerrte Bilddarstellung als optisch korrektes Bild wahrnimmt. Die Verzerrung kann dabei derart sein, dass die Bilddarstellung respektive Information als "auf der Fahrbahn liegend" wahrgenommen wird oder als "auf der Fahrbahn stehend", das heißt, dass die Verzerrung je nachdem, wie die schlussendliche Wahrnehmung sein soll, ermittelt und erzeugt wird.

Die verzerrte Bilddarstellung ermöglicht es also, den Bereich zwischen den beiden Fahrzeugachsen als Projektionsfläche zu nutzen, sodass auch weiter entfernt befindliche Personen, die beispielsweise in einem Abstand von 5 Metern und mehr zum Fahrzeug stehen, die verzerrt dargestellte Information als optische korrekt wahrnehmen können. Gleichzeitig steht auch eine entsprechend große Projektionsfläche zur Verfügung, da eben der gesamte Fahrbahnbereich zwischen den beiden Achsen genutzt werden kann. Mit zunehmender Entfernung und demzufolge auch immer stärkerer optischer Verzerrung innerhalb der Bilddarstellung kann die Person immer weiter unter das Fahrzeug blicken, sodass im Idealfall der gesamte Bereich zwischen den beiden Achsen zur optische verzerrten Projektionsdarstellung genutzt werden kann. Hierdurch lässt sich folglich zu jeder Tages- und Nachtzeit eine entsprechende Kommunikation mit anderen Verkehrsteilnehmern erreichen, wie auch eine entsprechend große oder umfangreiche Bilddarstellung aufgrund der gegebenen großen Projektionsfläche möglich ist.

Die Bildgebungseinrichtung ist, wie beschrieben, zunächst dazu ausgelegt oder eingerichtet, die optisch verzerrte Informationsdarstellung mit der Projektionseinrichtung im Fahrbahnbereich zwischen den beiden Achsen zu projizieren respektive die Verzerrung diesbezüglich zu ermitteln. Zusätzlich kann natürlich auch der Bereich vor der Vorderachse und/oder der Bereich vor der Hinterachse genutzt werden, das heißt, dass sich die optisch verzerrte Informationsdarstellung vom Bereich zwischen den Achsen in den Bereich vor einer oder vor beiden Achsen erstreckt.

Die Bildgebungseinrichtung bzw. deren Projektionseinrichtung kann entweder positionsfest am Unterboden angeordnet sein. Sie kann beispielsweise in einem Gehäuse mit einer entsprechend transparenten Abdeckscheibe geschützt aufgenommen sein. Über eine geeignete Steuerungseinrichtung als Teil der Bildgebungseinrichtung kann die Art der Bilddarstellung sowie die Bildgröße entsprechend variiert werden, wobei, wenn eine positionsfeste Anordnung gegeben ist, letztlich der beleuchtete Fahrbahnbereich durch eine Art Zoom in seiner Größe variiert werden kann. Um auch eine Variation des Projektionsortes innerhalb der gesamten Projektionsfläche vorzunehmen, ist es zweckmäßig, wenn die Bildgebungseinrichtung oder die Projektionseinrichtung beweglich am Unterboden angeordnet ist. Denkbar ist es, dass die Bildgebungseinrichtung bzw. die Projektionseinrichtung drehbar ist, also beispielsweise um 360° um eine Vertikalachse verdreht werden kann, sodass, je nachdem, von welcher Seite aus unter das Fahrzeug geblickt wird, die Projektionsdarstellung bestmöglich positioniert wird. Auch ist es denkbar, die Projektionsdarstellung linear zu verfahren, also bestmöglich zwischen den beiden Achsen zu positionieren. Im Falle einer beweglichen Anordnung kann die entsprechende Positionierung der Bildgebungseinrichtung bzw. der Projektionseinrichtung auch davon abhängig gemacht werden, von wo aus eine Person unter das Fahrzeug blickt respektive wo sich diese Person befindet. Dies kann, worauf nachfolgend noch eingegangen wird, erfasst werden, das heißt, dass die Positionierung letztlich in Abhängigkeit des aktuell erfassten Blickwinkels einer zu informierenden Person bestimmt wird.

Grundsätzlich ist es bereits ausreichend, wenn nur eine Bildgebungseinrichtung vorgesehen ist, da über diese, insbesondere wenn beweglich, eine entsprechend umfangreiche Informationsdarstellung möglich ist. Zweckmäßig ist es jedoch, wenn mehrere Bildgebungseinrichtungen bzw. Projektionseinrichtungen vorgesehen sind, die jeweils auf unterschiedliche Bereiche des Untergrunds projizieren. In diesem Fall kann also beispielsweise je nachdem, wo sich eine unter das Fahrzeug blickende respektive zu informierende Person befindet, die bestmöglich positionierte Bildgebungseinstellung zur Bilddarstellung verwendet werden. Selbstverständlich ist es aber auch denkbar, beide Bildgebungs- bzw. Projektionseinrichtungen synchron zu betreiben, sodass sich die verschiedenen über sie projizierten Informationsdarstellungen ergänzen und, zumindest bereichsweise, überlappen und auf diese Weise eine vergrößerte Gesamtbilddarstellung erfolgen kann.

In einer nicht beanspruchten Ausführungsform erfolgt die Verzerrung in Abhängigkeit eines definierten Blickwinkels, mit dem zumindest eine fiktive Person unter das Fahrzeug blickt. Beispielsweise sei angenommen, dass dieser Blickwinkel bezüglich einer in einem Fahrzeug sitzenden Person und einer definierten Entfernung von 15 Metern zum eigenen Fahrzeug bestimmt wird. Hierüber ist also einerseits die Höhe der Person, von der aus sie schräg unter das eigene Fahrzeug blickt, als auch die Entfernung als entsprechender, blickwinkelbestimmender Parameter definiert. Bezüglich eines solchen festen, vordefinierten Blickwinkels kann die Bildgebungseinrichtung sodann die entsprechend optisch verzerrte Informationsdarstellung erzeugen und projizieren. Beispielsweise ist es denkbar, über eine fahrzeugseitig verbaute Erfassungssensorik den Abstand zu einem in der Umgebung befindlichen Fahrzeug, beispielsweise einem hinter dem eigenen Fahrzeug fahrenden Kraftfahrzeug zu ermitteln und die Informationsdarstellung dann aufzuprojizieren, wenn sich das hinter dem eigenen Fahrzeug fahrende Kraftfahrzeug respektive die dort befindliche Person in einem Abstandsintervall von beispielsweise 10 - 20 Metern hinter dem eigenen Fahrzeug befindet, da die Person dann immer noch hinreichend weit unter das Fahrzeug blicken kann, wenngleich nicht unbedingt unter dem idealen Blickwinkel. Jedoch ist selbst bei leicht verändertem Blickwinkel immer noch eine ausreichend detaillierte Informationsdarstellung möglich.

Erfindungsgemäß ist jedoch vorgesehen, dass eine Erfassungseinrichtung zur Erfassung eines sich in der Umgebung befindlichen Objekts sowie zur Zuordnung eines Blickwinkels zu dem Objekt vorgesehen ist, wobei die Bildgebungseinrichtung zur Erzeugung und Projektion der verzerrten Informationsdarstellungen in Abhängigkeit des ermittelten Blickwinkels ausgebildet ist. Gemäß der Erfindung wird folglich ein in der Umgebung befindliches Objekt wie beispielsweise ein anderes Kraftfahrzeug ermittelt und der Abstand dazu bestimmt. Zu diesem Objekt wird dann der Blickwinkel, mit dem eine im Fahrzeug sitzende Person unter das eigene Fahrzeug blickt, bestimmt und darauf gestützt sodann die optische Verzerrung ermittelt und das entsprechend optisch verzerrte Projektionsbild erzeugt und aufprojiziert. Das heißt, dass in diesem Fall nicht mit einem vorab festgelegten Blickwinkel die erforderliche Verzerrung ermittelt wird, sondern mit einem der aktuellen Situation entsprechendem Blickwinkel die Verzerrung bestimmt wird. Dies ist insbesondere zweckmäßig, wenn beispielsweise im Fall des autonomen Fahrens, wo Fahrzeuge mit einem entsprechenden, über längere Zeit beibehaltenen Abstand hintereinander fahren, eine Informationsdarstellung erfolgen soll. Die verzerrte Informationsdarstellung ändert sich nicht, da der einmal erfasste Blickwinkel, der der Bilderzeugung zu Grunde liegt, sich nicht ändert.

In Weiterbildung dieses Erfindungsgedankens ist es denkbar, dass die Erfassungseinrichtung auch zur Erfassung einer Bewegung des Objekts sowie der Zuordnung des sich verändernden Blickwinkels und die Bildgebungseinrichtung zur Erzeugung und Projektion der verzerrten Informationsdarstellung bezüglich des veränderten Blickwinkels ausgebildet ist. Hierüber kann also erfasst werden, wenn sich der Abstand zwischen dem eigenen Fahrzeug und dem Objekt ändert. Denkbar ist es also beispielsweise, wenn ein Fahrzeug in einer Entfernung von 20 Metern erfasst wird, zunächst dieser Position einen entsprechenden Blickwinkel zuzuordnen und die Verzerrung hierauf gestützt zu ermitteln und zu erzeugen. Nähert sich das Fahrzeug, so wird dies erfasst, sodass beispielsweise bei einer erfassten Entfernung von nur noch 15 Metern ein weiterer Blickwinkel zugeordnet wird, die Verzerrung wird erneut ermittelt und die Informationsdarstellung adaptiert. Bei weiterer Annäherung, beispielsweise einem Abstand von 10 Metern, wird erneut eine Blickwinkelzuordnung vorgenommen und eine weitere Adaption der Informationsdarstellung erfolgen. Hierüber kann also eine beispielsweise stufenweise Adaption der Informationsdarstellung an sich ändernde Abstände des Objekts respektive der Person erfolgen.

Besonders vorteilhaft ist es jedoch in diesem Zusammenhang, wenn die Erfassungseinrichtung zur kontinuierlichen Erfassung der Bewegung sowie zur kontinuierlichen Zuordnung des sich ändernden Blickwinkels und die Bildgebungseinrichtung zur kontinuierlichen Anpassung der verzerrten Informationsdarstellung an den sich ändernden Blickwinkel ausgebildet ist. Gemäß dieser Erfindungsvariante erfolgt also eine permanente Adaption an einen sich ändernden Abstand und damit einen sich ändernden Blickwinkel. Ausgehend von einer ersten Verzerrungsermittlung wird demzufolge die verzerrte Informationsdarstellung kontinuierlich nachgeführt und auch größenmäßig adaptiert. Das heißt, dass eine Person in einem nachfolgenden, auf das eigene Fahrzeug kontinuierlich auffahrenden Fahrzeugs stets eine optimale Informationsdarstellung trotz sich änderndem Abstand und damit sich änderndem Blickwinkel unterhalb des eigenen Fahrzeugs erkennen kann. Denn wie beschrieben wird die optische Verzerrung der Informationsdarstellung und natürlich auch die Darstellungsgröße kontinuierlich nachgeführt und an den sich ändernden Blickwinkel adaptiert.

Neben dem Kraftfahrzeug selbst betrifft die Erfindung ferner ein Verfahren gemäß dem unabhängigen Anspruch 8 zur Darstellung einer Information auf einem Untergrund im Bereich eines wenigstens zweiachsigen Kraftfahrzeugs, wobei mittels einer Bildgebungseinrichtung umfassend eine an einem vom Untergrund beabstandeten Unterboden des Kraftfahrzeugs angeordnete Projektionseinrichtung eine bezüglich eines Blickwinkels verzerrte Informationsdarstellung erzeugt und auf den sich zwischen den beiden Achsen befindlichen Untergrund projiziert wird. Erfindungsgemäß ist vorgesehen, dass mittels einer Erfassungseinrichtung ein sich in der Umgebung befindliches Objekt erfasst und dem Objekt ein ermittelter Blickwinkel in den Projektionsbereich zugeordnet wird, wobei die Bildgebungseinrichtung die verzerrte Informationsdarstellung in Abhängigkeit des ermittelten Blickwinkels erzeugt und projiziert.

Dabei kann mittels der Bildgebungseinrichtung die verzerrte Informationsdarstellung auch in einen Bereich vor und/oder hinter den Achsen auf den Untergrund projiziert werden.

Mittels einer Erfassungseinrichtung wird ein sich in der Umgebung befindliches Objekt erfasst und dem Objekt ein Blickwinkel in den Projektionsbereich zugeordnet, wobei die Bildgebungseinrichtung die verzerrte Informationsdarstellung in Abhängigkeit des ermittelten Blickwinkels erzeugt und projiziert.

Dabei kann in weiterer Konkretisierung die Erfassungseinrichtung eine Bewegung des Objekts und eine geänderte Position erfasst sowie einen sich verändernden Blickwinkel zuordnet und die Bildgebungseinrichtung die verzerrte Informationsdarstellung bezüglich des veränderten Blickwinkels erzeugt und projiziert.

Besonders bevorzugt ist es dabei, wenn die Erfassungseinrichtung die Bewegung kontinuierlich erfasst und einen sich ändernden Blickwinkel kontinuierlich zuordnet und die Bildgebungseinrichtung die verzerrte Informationsdarstellung an den sich ändernden Blickwinkel kontinuierlich anpasst, das heißt, dass eine vollständige Nachführung der Verzerrung und Bildgröße und damit Adaption der verzerrten Bilddarstellung an den sich ändernden Blickwinkel erfolgt.

Weitere Vorteile und Einzelheiten der vorliegenden Erfindung ergeben sich aus den im Folgenden beschriebenen Ausführungsbeispielen sowie anhand der Zeichnungen. Dabei zeigen:
- Fig. 1: ein erfindungsgemäßes Kraftfahrzeug in einer ersten Verkehrssituation, und
- Fig. 2: ein erfindungsgemäßes Kraftfahrzeug in einer zweiten Verkehrssituation.

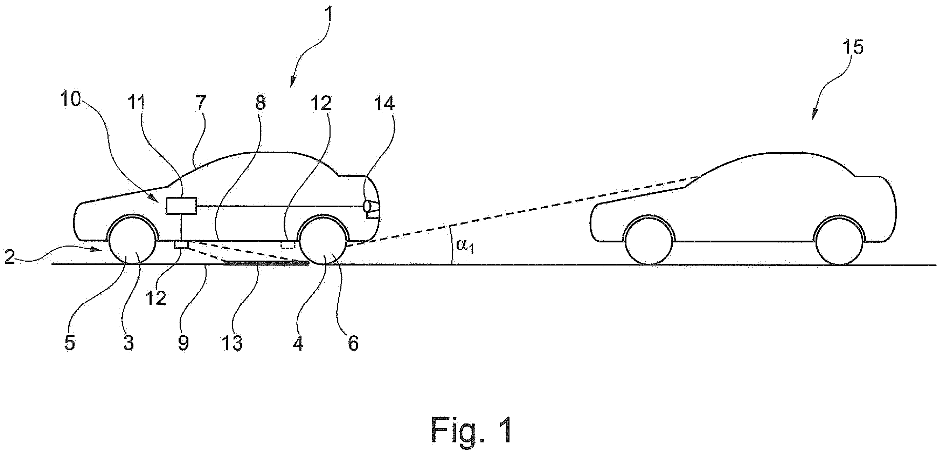

Fig. 1 zeigt ein erfindungsgemäßes Kraftfahrzeug 1, umfassend ein Fahrwerk 2 mit einer Vorderachse 3 und einer Hinterachse 4, die jeweils über zwei Räder 5, 6 verfügen. Vorgesehen ist ferner eine Karosserie 7, die auf dem Fahrwerk 2 sitzt. Die Karosserie 7 weist einen Unterboden 8 auf, der über das Fahrwerk 2 von einem Untergrund 9 beabstandet ist.

Das Kraftfahrzeug 1 weist eine Bildgebungseinrichtung 10 auf, umfassend eine Steuerungseinrichtung 11 sowie eine über diese angesteuerte Projektionseinrichtung 12, beispielsweise einen Beamer oder dergleichen. Die Bildgebungseinrichtung 10 ist in der Lage, auf den Untergrund 9, also eine Fahrbahn, eine Informationsdarstellung 13 zu projizieren. Die Informationsdarstellung 13 wird entsprechend optisch verzerrt dargestellt, sodass sie, wie nachfolgend noch beschrieben wird, von einem nachfolgenden Fahrzeug respektive einer darin befindlichen Person bestmöglich und korrekt erfasst werden kann. Das Kraftfahrzeug 1 umfasst ferner eine Erfassungseinrichtung 14, die in der Lage ist, beispielsweise den Abstand zu einem nachfolgenden Objekt 15 hier in Form eines Fahrzeugs zu erfassen. Die Erfassungseinrichtung 14 verfügt beispielsweise über eine eigene Steuereinrichtung, um gestützt auf der Entfernungsinformation einen Blickwinkel, unter dem eine im folgenden Fahrzeug sitzende Person unter das eigene Kraftfahrzeug 1 blickt, zu ermitteln. Die Erfassungseinrichtung 14 kann auch mit der Steuerungseinrichtung 11 kommunizieren bzw. diese zur Ermittlung des Blickwinkels nutzen, das heißt, dass die Steuerungseinrichtung 11 dann quasi auch Teil der Erfassungseinrichtung 14 ist. Die Erfassungseinrichtung 14 kommuniziert in jedem Fall mit der Bildgebungseinrichtung 10, damit dort letztendlich der der weiteren Bilderzeugung zu Grunde liegende Blickwinkel vorliegt.

Wie beschrieben ist in der in Figur 1 gezeigten Verkehrssituation ein Folgefahrzeug gezeigt, das in einem ersten Abstand zum eigenen Kraftfahrzeug 1 hinterherfährt. Eine im Objekt 15, also dem folgenden Fahrzeug sitzende Person blickt unter einem ersten Blickwinkel α1 unter das eigene Kraftfahrzeug. Die Person kann demzufolge, da das Kraftfahrzeug 15 beispielsweise in einem Abstand von nur 10 Metern hinter dem eigenen Kraftfahrzeug 1 fährt, nicht den gesamten Bereich zwischen den beiden Achsen 3, 4 einsehen, sondern nur den hinteren Teilbereich. Die Bildgebungseinrichtung 10 respektive Steuerungseinrichtung 11 ist nun in der Lage, basierend auf dem Blickwinkel α1 zu ermitteln, in welcher Größe eine Informationsdarstellung 13 und in welcher Position sie auf den Untergrund 9 zu projizieren ist, damit die Person im Fahrzeug 15 die Informationsdarstellung so vollständig wie möglich einsehen kann. Darüber hinaus ist die Bildgebungseinrichtung 10 auch in der Lage, gestützt auf den Blickwinkel α1 den Grad der optischen Verzerrung, mit der die Informationsdarstellung 13 auf den Untergrund 9 zu projizieren ist, zu ermitteln, damit die Person im Fahrzeug 15 die Informationsdarstellung 13 auch tatsächlich korrekt, also als unverzerrte Darstellung erkennen kann. In gezeigtem Beispiel erstreckt sich die Informationsdarstellung 13 von der Hinterachse 4 bis circa mittig zwischen den beiden Achsen 3, 4. Denkbar wäre es in diesem Zusammenhang auch, dass die Bildgebungseinrichtung 10 die Informationsdarstellung in ihrer Größe derart ermittelt, dass sie sich auch bis in den Bereich hinter der Hinterachse 4, also bis nahe dem Ende des Kraftfahrzeugs 1 hin erstreckt, da auch dieser Bereich noch gut einsehbar ist und über das eigene Fahrzeug 1 noch abgeschattet wird.

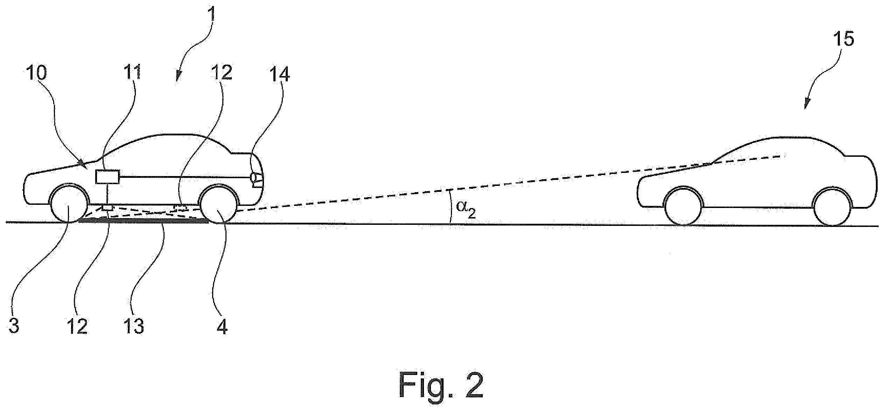

Die in Fig. 2 gezeigte Verkehrssituation ist etwas anders als die in Fig. 1 gezeigte Situation. Ersichtlich ist das Objekt 15, also das Fahrzeug deutlich weiter vom eigenen Kraftfahrzeug 1 beabstandet, beispielsweise in einer Entfernung von ca. 20 Metern. Die Erfassungseinrichtung 14 ist bevorzugt in der Lage, den Abstand zwischen dem Fahrzeug 15 und dem eigenen Fahrzeug 1 kontinuierlich zu erfassen, also die Bewegung zu ermitteln sowie die Abstandsveränderung zu bestimmen. Sie ist auch in der Lage, den sich dann zwangsläufig kontinuierlich ändernden Blickwinkel α zu bestimmen und an die Bildgebungseinrichtung 10 zu übertragen, die daraufhin kontinuierlich den Verzerrungsgrad der optischen Informationsdarstellung adaptiert, sodass trotz sich änderndem Fahrzeugabstands die Person im Fahrzeug 15 stets optimal die Informationsdarstellung erfassen kann. Nicht nur die Verzerrung wird dabei adaptiert, sondern natürlich auch die entsprechende Größe der Informationsdarstellung, da eine weitere beabstandete Person natürlich deutlich weiter unter das eigene Kraftfahrzeug 1 blicken kann als eine näher befindliche Person.

Die in Fig. 2 gezeigte Prinzipdarstellung zeigt eben diesen Fall. Ersichtlich ist das Objekt 15 deutlich weitere beabstandet, der erfasste Blickwinkel α2 ist deutlich kleiner als der Blickwinkel α1. Demzufolge kann zwangsläufig die Person im Objekt 15 wesentlich weiter unter das Kraftfahrzeug 1 blicken. Im gezeigten Beispiel ist nahezu der gesamte Bereich unterhalb des Unterbodens 8 zwischen den beiden Achsen 3, 4 einsehbar. Gestützt auf den Blickwinkel α2 ermittelt nun die Bildgebungseinrichtung 10 einerseits die erforderliche Größe der Informationsdarstellung 13, die sich im gezeigten Beispiel von der Vorderachse 3 bis zur Hinterachse 4 erstreckt und sich gegebenenfalls auch darüber hinaus noch erstrecken kann. Ebenso an den Blickwinkel α2 adaptiert ist auch der Grad der Verzerrung, der natürlich im Vergleich zur Situation gemäß Fig. 1 ebenfalls ein anderer sein muss, da die Person im folgenden Fahrzeug deutlich schräger respektive flacher unter das Fahrzeug 1 blickt.

Sei, wie beschrieben, angenommen, dass eine kontinuierliche Abstands- und damit Blickwinkelerfassung und damit auch eine kontinuierliche Adaption der Informationsdarstellung 13 erfolgt, würde letztlich während der Zeit, die zwischen dem Wechsel von der Fahrsituation gemäß Fig. 1 in die Fahrsituation 2 und der dabei erfolgenden Abstandsvariation verstreicht, kontinuierlich die Informationsdarstellung 13 in ihrer Projektionsgröße als auch in der Projektionsverzerrung angepasst. Die Person im Objekt 15 sieht demzufolge permanent eine optisch nicht verzerrte, klare Informationsdarstellung. Diese kann als auf der Fahrbahn liegend oder als auf der Fahrbahn stehend wahrgenommen werden, wobei je nach Art der Darstellung natürlich ebenfalls eine entsprechende optische Verzerrung erforderlich ist.

Insgesamt ermöglicht das erfindungsgemäße Kraftfahrzeug 1 folglich einerseits eine Darstellung von Informationen in lichtoptischer, auf die Fahrbahn projizierter Weise zu jeder Tages- und Nachtzeit, da unterhalb des Kraftfahrzeugs 1 ein hinreichend großer, abgeschatteter Bereich ist, in dem eine lichtoptische Informationsprojektion auch bei starker Umgebungshelligkeit möglich ist. Darüber hinaus bietet die Nutzung des gesamten unterhalb des Unterbodens 8 befindlichen Fahrbahnbereichs auch die Möglichkeit, die Informationsdarstellung hinreichend groß zu projizieren, wobei wie beschrieben die Informationsdarstellung zumindest im Bereich zwischen den beiden Achsen 3, 4, je nach Bedarf aber auch noch vor oder hinter der jeweiligen Achse 3, 4 erfolgt.

Während im gezeigten Beispiel ein hinter dem eigenen Kraftfahrzeug 1 fahrendes Objekt 15 wie hier das Fahrzeug unter das eigene Kraftfahrzeug blickt und über die Informationsdarstellung 13 informiert werden soll, sind natürlich auch andere Fahrszenarien denkbar. Beispielsweise kann vor dem eigenen Kraftfahrzeug ein anderes Fahrzeug fahren. Der dortige Fahrer kann beispielsweise über den Rückspiegel unter das eigenen Kraftfahrzeug 1 blicken, sodass auch hierüber dem Fahrer des vorausfahrenden Kraftfahrzeugs eine optische Informationsdarstellung gegeben werden kann. Wiederum wird hierbei der Abstand und der Blickwinkel in die Verzerrungs- und Größenermittlung eingerechnet. Natürlich ist hierbei auch zu berücksichtigen, dass der über den Rückspiegel unter das Kraftfahrzeug 1 blickende Fahrer die Informationsdarstellung spiegelverkehrt sieht, was ebenfalls in die entsprechende Darstellungserzeugung eingeht.

Selbst ein seitliches Blicken unter das Kraftfahrzeug 1 kann Grundlage für ein Informationsdarstellung sein, beispielsweise wenn sich ein Fußgänger von der Seite dem Kraftfahrzeug nähert, wobei auch diese Person über eine entsprechende Erfassungseinrichtung 14 erfasst und der Blickwinkel zugeordnet werden kann etc.

Als Informationsdarstellung 13 kann jede beliebige Information lichtoptisch dargestellt werden, beispielsweise in Bild- oder Symbol- oder Textform, wie natürlich auch in beliebigen Farben, sodass auch Warnungen, zumeist in roter, leuchtender Darstellung, ausgegeben werden können.

Die Bildgebungseinrichtung 10, zumindest deren Projektionseinrichtung 12, kann positionsfest verbaut sein, wobei die Projektionseinrichtung 12 derart eingerichtet ist, dass sie beliebig große und beliebig ausgerichtete Informationsdarstellungen je nach Erfordernis projizieren kann. Denkbar ist es aber auch, die Bildgebungseinrichtung 10 respektive zumindest deren Projektionseinrichtung 12 drehbar und/oder linear verfahrbar, also in ihrer Position änderbar, anzuordnen, sodass sie sich entsprechend bestmöglich für die anstehende Projektion positionieren kann. Auch kann mehr als eine Bildgebungseinrichtung respektive mehr als eine Projektionseinrichtung vorgesehen sein, wobei die jeweils projizierten Informationsdarstellungen einander ergänzen respektive auch bereichsweise überlappen können. Eine zweite Bildgebungseinrichtung 10 respektive Projektionseinrichtung 12 ist in den Figuren gestrichelt dargestellt.

## Patentansprüche

1. Kraftfahrzeug, umfassend ein Fahrwerk (2) mit wenigstens zwei Achsen (3, 4) mit jeweils zwei Rädern (5, 6) sowie eine auf dem Fahrwerk (2) sitzende Karosserie (7) mit einem von einem Untergrund (9) beabstandeten Unterboden (8), wobei wenigstens eine Bildgebungseinrichtung (10) mit einer am Unterboden (8) angeordneten Projektionseinrichtung (11) zum Projizieren einer Informationsdarstellung (13) auf den Untergrund (9) unterhalb des Unterbodens zumindest im Bereich zwischen den beiden Achsen (3, 4) vorgesehen ist, wobei die Bildgebungseinrichtung (10) zur Erzeugung und Projektion einer bezüglich eines Blickwinkels (α1, α2) verzerrten Informationsdarstellung (13) ausgebildet ist,
**dadurch gekennzeichnet,**
**dass** eine Erfassungseinrichtung (14) zur Erfassung eines sich in der Umgebung befindlichen Objekts (15) sowie zur Zuordnung eines ermittelten Blickwinkels (α1, α2) zu dem Objekt (15) vorgesehen ist, wobei die Bildgebungseinrichtung (10) zur Erzeugung und Projektion der verzerrten Informationsdarstellung (13) in Abhängigkeit des ermittelten Blickwinkels (α1, α2) ausgebildet ist.

2. Kraftfahrzeug nach Anspruch 1,
**dadurch gekennzeichnet,**
**dass** die Bildgebungseinrichtung (10) zum Erzeugen und Projizieren der verzerrten Informationsdarstellung (13) auch in einen Bereich vor und/oder hinter den Achsen (3, 4) ausgebildet ist.

3. Kraftfahrzeug nach Anspruch 1 oder 2,
**dadurch gekennzeichnet,**
**dass** die Bildgebungseinrichtung (10) oder die Projektionseinrichtung (12) beweglich am Unterboden angeordnet ist.

4. Kraftfahrzeug nach einem der Ansprüche 1 bis 3,
**dadurch gekennzeichnet,**
**dass** mehrere Bildgebungseinrichtungen (10) oder mehrere Projektionseinrichtungen (12) vorgesehen sind, die jeweils auf unterschiedliche Bereiche des Untergrunds (9) projizieren.

5. Kraftfahrzeug nach Anspruch 4,
**dadurch gekennzeichnet,**
**dass** sich die verschiedenen Informationsdarstellungen (13), zumindest bereichsweise, überlappen.

6. Kraftfahrzeug nach einem der vorangehenden Ansprüche,
**dadurch gekennzeichnet,**
**dass** die Erfassungseinrichtung (14) zur Erfassung einer Bewegung
des Objekts (15) sowie der Zuordnung eines sich verändernden Blickwinkels (α1, α2) und die Bildgebungseinrichtung (10) zur Erzeugung und Projektion der verzerrten Informationsdarstellung (13) bezüglich des veränderten Blickwinkels (α1, α2) ausgebildet ist.

7. Kraftfahrzeug nach Anspruch 6,
**dadurch gekennzeichnet,**
**dass** die Erfassungseinrichtung (14) zur kontinuierlichen Erfassung der Bewegung sowie zur kontinuierlichen Zuordnung des sich ändernden Blickwinkels (α1, α2) und die Bildgebungseinrichtung (10) zur kontinuierlichen Anpassung der verzerrten Informationsdarstellung (13) an den sich ändernden Blickwinkel (α1, α2) ausgebildet ist.

8. Verfahren zur Darstellung einer Information auf einem Untergrund (9) im Bereich eines wenigstens zweiachsigen Kraftfahrzeugs (1), wobei mittels einer Bildgebungseinrichtung (10) umfassend eine an einem vom Untergrund (9) beabstandeten Unterboden (8) des Kraftfahrzeugs (1) angeordnete Projektionseinrichtung (11) eine bezüglich eines Blickwinkels (α1, α2) verzerrte Informationsdarstellung (13) erzeugt und auf den sich zwischen den beiden Achsen (3, 4) befindlichen Untergrund (9) projiziert wird
**dadurch gekennzeichnet,**
**dass** mittels einer Erfassungseinrichtung (14) ein sich in der Umgebung befindliches Objekt (15) erfasst und dem Objekt (15) ein ermittelter Blickwinkel (α1, α2) in den Projektionsbereich zugeordnet wird, wobei die Bildgebungseinrichtung (10) die verzerrte Informationsdarstellung (13) in Abhängigkeit des ermittelten Blickwinkels (α1, α2) erzeugt und projiziert.

9. Verfahren nach Anspruch 8,
**dadurch gekennzeichnet,**
**dass** mittels der Bildgebungseinrichtung (10) die verzerrte Informationsdarstellung (13) auch in einem Bereich vor und/oder hinter den Achsen (3, 4) auf den Untergrund (9) projiziert wird.

10. Verfahren nach Anspruch 9,
**dadurch gekennzeichnet,**
**dass** die Erfassungseinrichtung (14) eine Bewegung des Objekts (15) und eine geänderte Position erfasst sowie einen sich verändernden Blickwinkel (α1, α2) zuordnet und die Bildgebungseinrichtung (10) die verzerrte Informationsdarstellung (13) bezüglich des veränderten Blickwinkels (α1, α2) erzeugt und projiziert.

11. Verfahren nach Anspruch 10,
**dadurch gekennzeichnet,**
**dass** die Erfassungseinrichtung (14) die Bewegung kontinuierlich erfasst und den sich ändernden Blickwinkel (α1, α2) kontinuierlich zuordnet und die Bildgebungseinrichtung (10) die verzerrte Informationsdarstellung (13) an den sich ändernden Blickwinkel (α1, α2) kontinuierlich anpasst.

## Claims

1. Motor vehicle, comprising a chassis (2) with at least two axles (3, 4) each having two wheels (5, 6), and a body (7) sitting on the chassis (2) and having an underbody (8) spaced apart from an underlying surface (9), wherein at least one imaging device (10) having a projection device (11), which is arranged on the underbody (8), for projecting an information display (13) onto the underlying surface (9) below the underbody at least in the region between the two axles (3, 4) is provided, the imaging device (10) being designed for generating and projecting an information display (13) which is distorted with respect to a viewing angle (α1, α2),
**characterized**
**in that** a detection device (14) for detecting an object (15) located in the surroundings and for assigning a determined viewing angle (α1, α2) to the object (15) is provided, the imaging device (10) being designed for generating and projecting the distorted information display (13) depending on the determined viewing angle (α1, α2).

2. Motor vehicle according to Claim 1,
**characterized**
**in that** the imaging device (10) is also designed for generating and projecting the distorted information display (13) into a region in front of and/or behind the axles (3, 4).

3. Motor vehicle according to Claim 1 or 2, **characterized**
**in that** the imaging device (10) or the projection device (12) is movably arranged on the underbody.

4. Motor vehicle according to any one of Claims 1 to 3,
**characterized**
**in that** a plurality of imaging devices (10) or a plurality of projection devices (12) are provided, each projecting onto different regions of the underlying surface (9).

5. Motor vehicle according to Claim 4,
**characterized**
**in that** the various information displays (13) overlap, at least in some regions.

6. Motor vehicle according to any one of the preceding claims,
**characterized**
**in that** the detection device (14) is designed for detecting a movement of the object (15) and for assigning a changing viewing angle (α1, α2), and the imaging device (10) is designed for generating and projecting the distorted information display (13) with respect to the changed viewing angle (α1, α2).

7. Motor vehicle according to Claim 6,
**characterized**
**in that** the detection device (14) is designed for continuously detecting the movement and for continuously assigning the changing viewing angle (α1, α2), and the imaging device (10) is designed for continuously adapting the distorted information display (13) to the changing viewing angle (α1, α2).

8. Method for displaying information on an underlying surface (9) in the region of an at least two-axle motor vehicle (1), wherein an imaging device (10) comprising a projection device (11), which is arranged on an underbody (8) of the motor vehicle (1), the underbody being spaced apart from the underlying surface (9), is used for generating an information display (13), which is distorted with respect to a viewing angle (α1, α2), and for projecting same onto the underlying surface (9) located between the two axles (3, 4),
**characterized**
**in that** a detection device (14) is used to detect an object (15) located in the surroundings and to assign to the object (15) a determined viewing angle (α1, α2) into the projection region, the imaging device (10) generating and projecting the distorted information display (13) depending on the determined viewing angle (α1, α2).

9. Method according to Claim 8,
**characterized**
**in that** the imaging device (10) is used to also project the distorted information display (13) onto the underlying surface (9) in a region in front of and/or behind the axles (3, 4).

10. Method according to Claim 9,
**characterized**
**in that** the detection device (14) detects a movement of the object (15) and a changed position, and assigns a changing viewing angle (α1, α2), and the imaging device (10) generates and projects the distorted information display (13) with respect to the changed viewing angle (α1, α2).

11. Method according to Claim 10,
**characterized**
**in that** the detection device (14) continuously detects the movement and continuously assigns the changing viewing angle (α1, α2), and the imaging device (10) continuously adapts the distorted information display (13) to the changing viewing angle (α1, α2).

## Revendications

1. Véhicule automobile, comprenant un châssis (2) comportant au moins deux essieux (3, 4), chacun pourvu de deux roues (5, 6), et une carrosserie (7) reposant sur le châssis (2), et comportant un soubassement (8) espacé d'un sol (9), au moins un dispositif d'imagerie (10) étant prévu, lequel comprend un dispositif de projection (11) disposé sur le soubassement (8) pour projeter un affichage d'informations (13) sur le sol (9) au-dessous du soubassement au moins dans la zone comprise entre les deux essieux (3, 4), le dispositif d'imagerie (10) étant conçu pour générer et projeter un affichage d'informations (13) qui est déformé par rapport à un angle de visualisation (α1, α2),
**caractérisé**
**en ce qu'**il est prévu un dispositif de détection (14) pour détecter un objet (15) se trouvant dans l'environnement et pour associer un angle de visualisation (α1, α2) déterminé à l'objet (15), le dispositif d'imagerie (10) étant conçu pour générer et projeter l'affichage d'informations (13) déformé en fonction de l'angle de visualisation (α1, α2) déterminé.

2. Véhicule automobile selon la revendication 1, **caractérisé**
**en ce que** le dispositif d'imagerie (10) est conçu pour générer et projeter également l'affichage d'informations (13) déformé dans une zone située à l'avant et/ou à l'arrière des essieux (3, 4).

3. Véhicule automobile selon la revendication 1 ou 2, **caractérisé**
**en ce que** le dispositif d'imagerie (10) ou le dispositif de projection (12) est disposé mobile sur le soubassement.

4. Véhicule automobile selon l'une des revendications 1 à 3,
**caractérisé**
**en ce qu'**il est prévu plusieurs dispositifs d'imagerie (10) ou plusieurs dispositifs de projection (12) qui projettent respectivement sur différentes zones du sol (9).

5. Véhicule automobile selon la revendication 4, **caractérisé**
**en ce que** les différents affichages d'informations (13) se chevauchent, au moins par zones.

6. Procédé selon l'une des revendications précédentes, **caractérisé**
**en ce que** le dispositif de détection (14) est conçu pour détecter un mouvement de l'objet (15) et pour associer un angle de visualisation (α1, α2) variable, et **en ce que** le dispositif d'imagerie (10) est conçu pour générer et projeter l'affichage d'informations (13) déformé par rapport à l'angle de visualisation (α1, α2) modifié.

7. Véhicule automobile selon la revendication 6, **caractérisé**
**en ce que** le dispositif de détection (14) est conçu pour détecter en continu le mouvement et pour associer en continu l'angle de visualisation (α1, α2) variable, et **en ce que** le dispositif d'imagerie (10) est conçu pour adapter en continu l'affichage d'informations (13) déformé à l'angle de visualisation (α1, α2) variable.

8. Procédé d'affichage d'informations sur un sol (9) dans la zone d'un véhicule automobile à au moins deux essieux (1), **caractérisé en ce qu'**au moyen d'un dispositif d'imagerie (10) comprenant un dispositif de projection (11) disposé sur un soubassement (8) du véhicule automobile (1) à distance de le sol (9), un affichage d'informations (13) déformé par rapport à un angle de visualisation (α1, α2) est généré et projeté sur le sol (9) situé entre les deux essieux (3, 4), **caractérisé**
**en ce qu'**un objet (15) se trouvant dans l'environnement est détecté au moyen d'un dispositif de détection (14), et **en ce qu'**un angle de visualisation (α1, α2) déterminé est associé à l'objet (15) dans la zone de projection, le dispositif d'imagerie (10) générant et projetant l'affichage d'informations (13) déformé en fonction de l'angle de visualisation (α1, α2) déterminé.

9. Procédé selon la revendication 8,
**caractérisé**
**en ce que** l'affichage d'informations (13) déformé est également projeté au moyen du dispositif d'imagerie (10) sur le sol (9) dans une zone située à l'avant et/ou à l'arrière des essieux (3, 4).

10. Procédé selon la revendication 9,
**caractérisé**
**en ce que** le dispositif de détection (14) détecte un mouvement de l'objet (15) et une position modifiée, et associe un angle de visualisation (α1, α2) variable, et **en ce que** le dispositif d'imagerie (10) génère et projette l'affichage d'informations (13) déformé par rapport à l'angle de vision (α1, α2) modifié.

11. Procédé selon la revendication 10,
**caractérisé**
**en ce que** le dispositif de détection (14) détecte en continu le mouvement et associe en continu l'angle de visualisation (α1, α2) variable, et **en ce que** le dispositif d'imagerie (10) adapte en continu l'affichage d'informations (13) déformé à l'angle de visualisation (α1, α2) variable.
